# EUROPEAN PATENT APPLICATION

(11) **EP 4 790 376 A1**
(43) Date of publication of application: **12.08.2026**
(21) Application number: 25156608.9
(22) Date of filing: 07.02.2025
(51) Int. Cl.: G01L 3/14, B62J 45/411

(54) **DETECTING EXTERNAL POWER INPUT TO AN ELECTRIC DRIVETRAIN OF AN E-BIKE**

(71) Applicant: SeyMotion GmbH, 82110 Germering (DE)
(72) Inventor: DELACHE, Alain, 06300 Nice (FR); VEY, Ole, 85625 Glonn (DE); SCHLOSS, Nadine, 82110 Germering (DE)
(74) Representative: Niederer, Johannes Martin Gabriel

(57) **Abstract**

A sensor unit 1 for detecting an external power input to an electric drivetrain ED of an e-bike is proposed. The sensor unit 1 comprises a first element 100 being coupled or couplable to an electric motor power output unit 10 and a second element 200 being coupled or couplable to an external power input unit 20, in particular an external human power input unit. The first element 100 comprises a first magnet 110, the second element 200 comprises a second magnet 210. The first element 100 and the first magnet 110 are both jointly rotatable about a z-axis. The second element 200 and the second magnet 210 are both jointly rotatable about the z-axis. The sensor unit 1 comprises sensor system configured to determine an angular position of the first magnet 110 about the z-axis and an angular position of the second magnet 210 about the z-axis. Furthermore, the sensor unit 1 comprises an elastic connection unit 400 configured to rotationally couple the first element 100 to the second element 200 about the z-axis such, that an angular offset between the angular positions of the first and second element 100, 200 is related to an applied torque between the first and second element 100, 200.

## Description

The present invention relates to the field of electrically assisted bicycles (e-bikes), and in particular to a sensor unit for detecting an external power input to an electric drive train of an e-bike and to an electric drivetrain system for an e-bike comprising the sensor unit. The sensor unit may be particularly suitable for a planetary gearset driven rear hub motor assisted e-bike.

In general, e-bike sensor units can be useful and necessary to provide an electric motor controller with information regarding when and how much assistance the electric motor needs to provide for the e-bike rider. Advantageously, such units comprise a torque measurement means for determining the driving force applied by a driver based on the torque acting between the conventional (human) drive and the motor drive. The torque measurement may then be combined with other determined values, e.g. from rotational speed sensors, in order to determine the respective power inputs from the two drives, in particular the external power input from the driver.

Established sensor units adapted for measuring a torque include strain gauge and magnetostrictive systems. The torque is determined on the basis of strain or stress properties between two rotating components that are directly coupled to each other with respect to a rotation around a common axis. Alternative torque measurement approaches are known, e.g., from WO 2012/136143 A1 and WO 2022/018366 A1, in which an elastic means is used in between the rotating components and a complex assembly of magnets and/or magnetizable structures in conjunction with magnetic sensors. The torque can then be derived from a relative twisting of the two components occurring under the effect of the elastic connection unit.

The known sensor units can be disadvantageous in terms of mechanical and/or electromechanical stability, in particular due to the prevalent vibrations during intended use and/or possible interference of the magnetic fields to be measured by other components, as well as with regard to the utilization of the limited installation space and undesirable additional weight. For instance, while magnetic torque measurement systems might provide higher mechanical stability due to the contactless nature of the measurement itself, those systems are particularly sensitive and thus can prove susceptible for magnetic interference, which can occur in mechanically and especially electromechanically powered drive systems. Overall, the known sensor units appear to be particularly challenged in electric drivetrain systems prone to installation space and/or magnetic interference limitations, which for example is especially the case for e-bikes with planetary gearset driven rear hub electric motors.

It is therefore an objective of the invention at hand to provide an alternative and in particular improved solution for detecting an external power input to an electric drivetrain of an e-bike. The improvement may be founded in addressing any one of the above mentioned disadvantages.

This object is solved by a sensor unit and an electric drivetrain system according to the respective independent claims. Special embodiments and further developments are the subject of the dependent claims and the following description.

The proposed sensor unit for detecting an external power input to an electric drivetrain of an e-bike comprises a first element being coupled or couplable to an electric motor power output unit and a second element being coupled or couplable to an external power input unit, in particular an external human power input unit. The first element comprises a first magnet, the second element comprises a second magnet. The first element and the first magnet are both jointly rotatable about a z-axis. In other words, the first element and the first magnet are fixed relative to one another, at least with respect to rotation about the z-axis. The second element and the second magnet are both jointly rotatable about the z-axis. In other words, the second element and the second magnet are fixed relative to one another, at least with respect to rotation about the z-axis. The sensor unit comprises a sensor system configured to determine an angular position of the first magnet about the z-axis and an angular position of the second magnet about the z-axis. Furthermore, the sensor unit comprises an elastic connection unit configured to rotationally couple the first element to the second element about the z-axis such, that an angular offset between the angular positions of the first and second element is related to an applied torque between the first and second element.

In result, the proposed sensor unit provides a rather simple and stable arrangement enabling torque measurement and also rotational speed measurements for determining an external power input, e.g. from a driver, to an electric drivetrain of an e-bike. Furthermore, the proposed sensor unit may provide or enable a precise speed measurement and/or a discrimination in forward/backward pedaling.

The first and second magnet are each configured to provide a magnetic field that, upon rotation about the z-axis, accordingly rotates and thus varies about the z-axis. The sensor system may comprise a first sensor and a second sensor. The first sensor may be configured to detect the magnetic field of at least the first magnet. The second sensor may be configured to detect the magnetic field of at least the second magnet. The sensor system may comprise a processor configured to determine the angular positions of the first and second magnet based on the detected magnetic fields of the first and second magnet, in particular based on the magnetic fields detected by the first and second sensor. The first and second sensor and/or the first and second magnet may be arranged and configured such that the first sensor predominantly detects the magnetic field of the first magnet and the second sensor predominantly detects the magnetic field of the second magnet. This can be provided, for example, by spacing the magnets and associated sensors apart and/or magnetically shielding them. The sensor system may be configured to determine the respective angle or angular position of the corresponding magnet about the z-axis in relation to a pre-defined reference system, e.g. through calibration.

For example, when no torque is applied to the first and/or second element, any difference between measured angles of the first and second magnet, i.e. difference between angular positions of the first and second magnet, is constant (within a predetermined tolerance or range due to, e.g. mechanical play of the drivetrain components) and provides an equilibrium or rest angle at which any rotation of the first and second element relative to each other is at rest, i.e. both elements are not rotating or rotating at equal and constant angular velocity. When some torque is applied, e.g. a torque exceeding a predetermined threshold value, a deviation from the rest angle is observed resulting in an angular offset between the first and second element, thus causing deformation of the elastic connection unit. The angular offset or offset angle may be positive or negative with respect to the rest angle - depending on the configuration of the elastic connection unit and whether the elastic connection unit is stretched or compressed, respectively. The deformation of the elastic connection unit results in a restoring force of the elastic connection unit, the restoring force being a function of the applied torque. In particular, in case the elastic deformation of the elastic connection unit obeys Hook's law, the restoring force is proportional to the acting torque. Consequently, by providing measurement of the angular positions of the first and second magnet and knowing the function between deformation or restoring force of the elastic connection unit and torque (e.g. based on calibration measurements or appropriate estimations based on material and mechanistic properties), the sensor unit enables torque detection and determination. Furthermore, the respective applied power may be determined based on the angular speed of the first and/or second elements which results from the time derivative of the angular position of, respectively, the first and/or second magnets about the z-axis. In order to account for a regularly existing mechanical play of the drive components, for example in a cassette, the rest angle may cover a predetermined range, e.g. of about 6-7°. The accuracy of the measured angles, in particular the determined offset angle may be 0.1°.

The first and second magnet may each be arranged rigidly fixed with their corresponding first and second element not only with respect to a rotation about the z-axis but also with respect to a movement along any other spatial component. This may enable a direct mechanical coupling of the sensed objects, i.e. the magnets, and the target objects, i.e. the respective elements. While, in order to reduce complexity of the arrangement, the corresponding magnet may be a single magnet, the magnet may also be a magnetic structure, e.g. a magnetic structure of several magnet elements providing a magnetic field with the previously described characteristics. The first and second magnet may each be a ring magnet arranged concentrically with the z-axis and along an x,y-plane perpendicular to the z-axis. This arrangement may provide a mechanically stable configuration of the sensed objects, i.e. the magnets, for the dynamic rotational system at hand. The first and second sensor may each be configured to measure a magnetic flux or field in the x,y-plane, which can be related to an angular position of the corresponding magnet. A change in the magnetic flux along the x,y-plane thus also enables a change in the corresponding position angle to be measured. The first and/or second magnets may each be a two pole ring magnet with two diametrically arranged poles. In contrast to axially arranged poles, the poles are then arranged opposite each other in the respective x,y-plane in relation to the z-axis, so that a rotation of the corresponding magnet results in a corresponding change in its magnetic field in the x,y-plane. In order to increase the sensitivity of the measurement, four or six corresponding magnet poles can also be provided, for example. Presently, it may be sufficient and appropriate if the corresponding magnets are permanent magnets, in particular permanent diametrical two pole magnets. The magnets may be arranged at a distance from each other along the z-axis. This may minimize or eliminate any inappropriate mutual interference of the magnetic fields of the corresponding magnets and/or disturbance of the sensors. The sensor system may be arranged at the z-axis. For example, the first and second sensor may each be arranged at the z-axis. This may be particularly useful in combination with magnets provided as ring magnets, potentially minimizing required space and maximizing measurement reliability. The first and second sensor may each be arranged in a common x,y-plane with the first and second magnet, respectively. This can be particularly useful in combination with magnets provided at a distance from each other along the z-axis. The sensors may be contactless 2d or 3d magnetic sensors and/or hall sensors. The first and/or second sensors may be rotationally fixed or stationary with respect to the z-axis and/or a frame of the e-bike, which may enable measurement of the angular speed of the corresponding first and second magnet and consequently first and second element about the z-axis. For example, the sensors may be fixed at or within a stationary main shaft component extending along the z-axis, e.g. at or within the axle of a rear wheel hub or an axle housing of a crankset.

The first element may be coupled or couplable to the electric motor power output unit through a ratchet connection configured to drivingly engage the first element solely in a first rotational direction about the z-axis. As such, the sensor unit may provide and/or be compatible with a free wheel connection to the electric motor power unit. In other words, the electric motor output unit may only engage with the sensor unit and in particular the first element of the sensor unit, when an angular velocity of the second element in the first rotational direction exceeds the angular velocity of the electric motor output unit at the ratchet connection in the first rotational direction. The second element may be coupled or couplable to the external power input unit through a cassette or a rear sprocket wheel. As such, the sensor unit may provide and/or be compatible with a multiple gear or single speed connection to the external power input unit. Furthermore, the second element may be formed, at least in part, as a cassette or rear sprocket wheel. Alternatively, in particular when the electric motor power output unit is a crank or mid drive electric motor power unit, the second element may be coupled or couplable, in particular directly coupled, to a pedal crankset of the e-bike.

The elastic connection unit may be arranged in between the first and second element and thus first and second magnet. The elastic connection unit may then also act as a spacer or an additional spacer between the first and second element and/orfirst and second magnet which may reduce undesired magnetic field disturbance or interference. The elastic connection unit may comprise at least two elastic elements distributed around the z-axis in the circumferential direction. The elastic connection unit may comprise at most twenty, at most twelve or at most eight elastic elements distributed around the z-axis in the circumferential direction. The number of elastic elements may be chosen according to the required angular sensitivity and/or measurement range of the sensor unit while reducing wear and tear. The elastic elements may be evenly distributed around the z-axis in the circumferential direction, thus equalizing any wear and tear. The elastic connection unit may comprise springs. The elastic elements may be formed as springs. In an embodiment, the elastic connection unit may comprise or consist of a thermoplastic elastomer. Additionally or alternatively - and depending on the maximum offset angle to be considered while avoiding any plastic deformation of the elastic connection unit- the elastic connection unit may comprise or consist of a soft metal. The elastic connection unit may have a Young's modulus between 1 GPa and 40 GPa, in particular between 5 GPa and 20 GPa. In contrast, the first and second element may be rigid elements, having a Young's modulus of at least 50 GPa, in particular at least 70 GPa, thus reducing systematic measurement errors of the sensor unit. The number of elastic elements and material properties of the elastic connection unit may be chosen according to the desired range of and sensitivity to the torque to be determined. Typically, the torque values in e-bike drives, measured at the rear wheel do not exceed 600 Nm. It may be useful to provide torque measurement sensitivity from 0.5 Nm or 1 Nm upwards. The measurement range may be not less than 50 Nm, in particular not less than 100 Nm. Each elastic element of the elastic connection unit may comprise or consist of a sleeve and/or a protrusion and the first and second element may comprise pins corresponding to the number of elastic elements, which are inserted or can be inserted into the corresponding sleeve along the z-axis and/or radially abut or can abut against the corresponding protrusion. This may enable a rather stable coupling of the elastic connection unit with the first and second element about the z-axis while facilitating assembly.

The sensor unit may further comprise a third magnet rotationally coupled or couplable to a rear wheel of the e-bike rotatable about the z-axis and the sensor system may be configured to detect an angular position of the third magnet about the z-axis. This may be particularly suited for a rear hub driven e-bike and may enable determination of the actual driving speed of the e-bike. The sensor system may comprise a third sensor configured to detect a magnetic field of at least the third magnet. In particular, the third magnet may be rigidly coupled, at least with respect to a rotation about the z-axis, to the rear wheel of the e-bike, e.g. to the rotor of the rear wheel main shaft and/or hub of the e-bike. The third magnet and third sensor may be arranged, configured and designed according to the above features of the first and second magnet and the first and second sensor. In other words, the sensor unit may provide an integrated system enabling determination of all or at least most relevant parameters for controlling an electric drive train system of an e-bike, in particular a rear hub driven e-bike.

The sensor unit may further comprise at least one bearing configured to rotatably bear the first and/or second element about the z-axis. The bearing may thus enable rotation of the first and/or second element about the z-axis while optionally also enabling a stationary arrangement of the corresponding sensors, e.g. within or at a stator coupled via the bearings to the rotating first and/or second element. In particular, the sensor unit may comprise at least two bearings configured to bear the first and the second element about the z-axis. The bearings may be arranged on opposite sides of the elastic connection unit along the z-axis. This can provide an even bearing of the first and second element relative to each other. The bearing or bearings may be plain bearings. In contrast to rolling element bearings, plain bearings are generally more readily available in a non-magnetic or non-magnetizable form.

The sensor unit may be designed as a cartridge with a housing configured to secure the sensor unit to, optionally inside, a main shaft, in particular an inner bearing of a main shaft, of a rear wheel or crankset of the e-bike. In other words, the sensor unit may be provided as an integrated solution which may be readily retrofitted in existing e-bike drivetrain systems. For instance, the housing may be formed as a part or portion of the first or second element, e.g. as part or portion of a cassette or a rear sprocket wheel.

The sensor unit, except for the magnets, may be made from a non-magnetic or poorly magnetic material. For instance, the first element apart from the first magnet, the second element apart from the second magnet, the elastic connection unit, the housing, and/or the bearings may be made of a non-magnetic material. Considering the sensitivity of the sensors used with the sensor unit, using non-magnetic or poorly magnetic materials as compared to the magnets, may further reduce magnetic field disturbance and interference. Alternatively, the first element may be itself designed as the first magnet and/or be made from a magnetic material. This may be acceptable in view of magnetic field disturbance and interference, since the first element - in particular when being connected to the electric motor power unit through a ratchet connection - may be sufficiently magnetically decoupled from other components or may not be readily available as a non-magnetic component.

Furthermore, an electric drivetrain system for an e-bike is proposed. The drivetrain system comprises an electric power output unit with an electric motor, an external power input unit and the sensor unit according to any one of the embodiments described herein. The external power input unit may be an external human power unit, i.e. a power unit as known from a conventional bike and/or e-bike drivetrain, e.g. including a free wheel pedal drive with a pedal crankset drivingly coupled to a cassette or rear sprocket wheel, which in turn is drivingly coupled to a drive or rear wheel of the bike. The electric motor may be a rear hub electric motor, in particular a planetary gearset driven rear hub electric motor. Such motors and the associated drive trains are regularly particularly challenging in terms of the available installation space and magnetic interference fields. They therefore appear to be particularly suitable for the proposed sensor unit. Alternatively, the electric motor may be a crank or mid drive electric motor. Corresponding rear hub electric motors and rear hub electric motor driven electric motor power output units as well as crank or mid drive electric motors and crank or mid drive electric motor driven electric motor power output units are well-known. The sensor unit proposed herein, in particular when designed as a cartridge, may be compatible with those electric motor output units and external power input units and, for instance, retrofitted in existing conventional bike and/or e-bike drivetrain systems. For instance, the sensor unit may be arranged or arrangeable inside a main shaft, in particular an inner bearing of a main shaft, of a rear wheel of the e-bike. Alternatively, the sensor unit may be arranged or arrangeable inside a main shaft, in particular an inner bearing of a main shaft or a bottom bracket, of a crankset.

The electric drivetrain system and/or the sensor unit may further comprise a processor configured to calculate a torque input and/or a power input based on the angular positions of the first and second magnet and/or the angular position of the third magnet as described above. Furthermore, the electric drivetrain system and/or the sensor unit may comprise a controller configured to control an electric motor power output based on the torque input and/or power input provided from the processor.

Several embodiments have been disclosed herein. From the following detailed description, which shows and describes two exemplary embodiments of the invention, further embodiments of the present invention and appropriate combinations of features will become apparent to those skilled in the art. Accordingly, the figures and detailed description are to be regarded as exemplary and not restrictive. Recurring features are marked with the same reference signs in the description of the accompanying figures in which
- Fig. 1: shows a schematic perspective view of a sensor unit according to a first embodiment of the invention,
- Fig. 2: shows a schematic detail view of a magnet and sensor,
- Fig. 3: shows a schematic cross-sectional view of a sensor unit according to a second embodiment of the invention,
- Fig.4: shows an exploded-view of the embodiment of Fig. 3 and
- Fig. 5: shows a schematic depiction of an electric drivetrain system according to an embodiment of the invention.

In the following, recurring features are described once for all figures. Reference is only made to individual figures where appropriate or where differences or alternatives are to be identified.

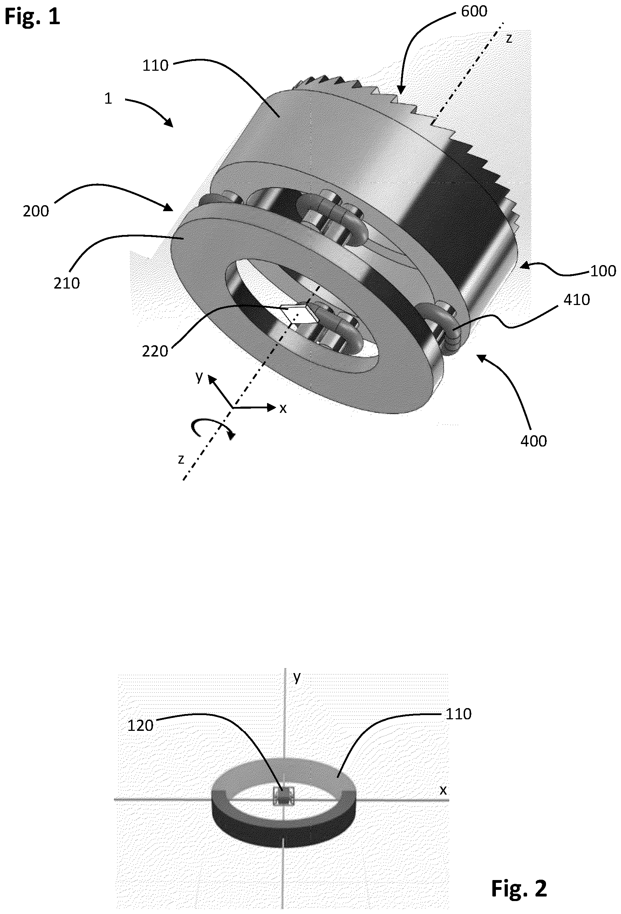

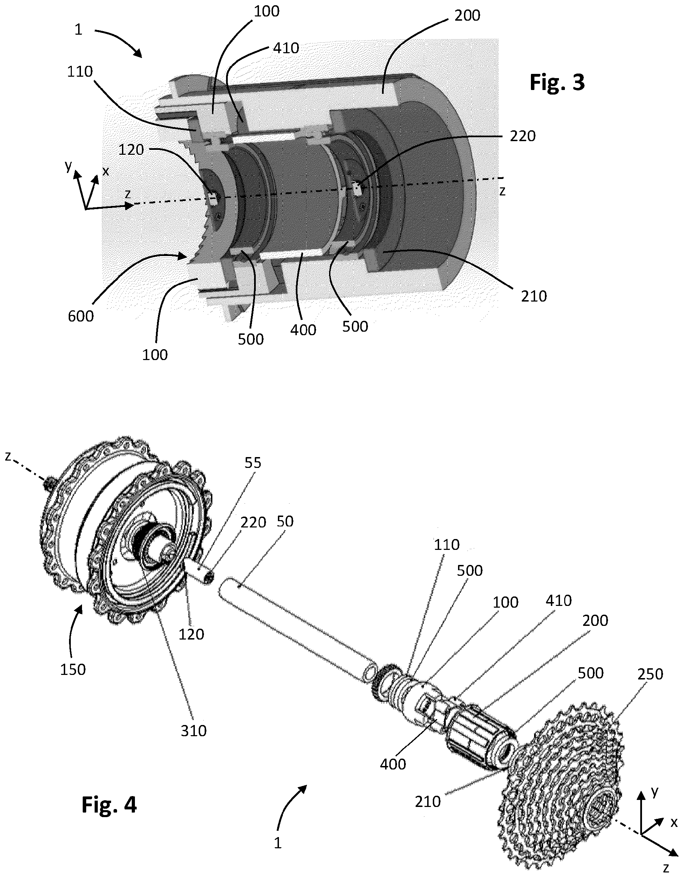

Figures 1, 3 and 4 show two different embodiments of a sensor unit 1 for detecting an external power input to an electric drivetrain of an e-bike. Figure 4 also shows an implementation of a sensor unit 1 with a rear hub drive. The sensor unit 1 comprises a first element 100 being coupled or couplable to an electric motor power output unit 10 and a second element 200 being coupled or couplable to an external human power input unit 20. The first element 100 comprises a first magnet 110, the second element 200 comprises a second magnet 210. The first element 100 and the first magnet 110 are both jointly rotatable about a z-axis (dotted line z in Figures 1, 3 and 4). The second element 200 and the second magnet 210 are both jointly rotatable about the z-axis. The first and second magnet 110, 210 are arranged rigidly fixed with their corresponding first and second element 100, 200. The sensor unit 1 comprises a sensor system configured to detect an angular position of the first magnet 110 about the z-axis and an angular position of the second magnet 210 about the z-axis. Furthermore, the sensor unit 1 comprises an elastic connection unit 400 configured to rotationally couple the first element 100 to the second element 200 about the z-axis such, that an angular offset between the angular positions of the first and second element 100, 200 is related to an applied torque between the first and second element 100, 200.

The first and second magnet 110, 210 are each configured to provide a magnetic field that, upon rotation about the z-axis, accordingly rotates and thus varies about the z-axis. Figure 2 schematically illustrates the arrangement of the magnets and corresponding sensors based on the example of the first magnet 110 and the first sensor 120. The sensor system comprises a first sensor 120 (only visible in Figure 3) configured to detect the magnetic field of the first magnet 110 and a second sensor 220 (only visible in Figures 3 and 4) configured to detect the magnetic field of the second magnet 220. The sensor system may comprise a processor configured to determine the angular positions of the first and second magnet 110, 210 based on the magnetic fields of the first and second magnet detected by the first and second sensor 120, 220. Alternatively, a corresponding processor may be provided by the electric drivetrain system described further below. The first and second magnet 110, 120 are each a ring magnet arranged concentrically with the z-axis and along an x,y-plane perpendicular to the z-axis. The first and second sensor 120, 220 are each configured to measure a magnetic flux or field in the x,y-plane, see e.g. Figure 2, which can be related to an angular position of the corresponding magnets 110, 210. A change in the magnetic flux along the x,y-plane thus also enables a change in the corresponding position angle to be measured. The first and second magnet 110, 220 are each a permanent two pole ring magnet with two diametrically arranged poles, see e.g. Figure 2. In order to increase the sensitivity of the measurement, four or six corresponding magnet poles can also be provided, for example. The magnets 110, 210 are arranged at a distance from each other along the z-axis. The first and second sensor 120, 220 are arranged at the z-axis in a common x,y-plane with the corresponding magnets 210, 220. The sensors 120, 220 are contactless 3d magnetic sensors, e.g. 3d hall effect sensors. The sensors may also be contactless 2d sensors. The first and second sensor 120, 220 are rotationally fixed with respect to the z-axis and stationary with respect a frame of the e-bike. In particular, the first and second sensors 120, 220 are fixed at a stationary axle extending along the z-axis (stator shaft 55 in Figure 4).

The first element 100 is coupled or couplable to the electric motor power output unit 10 through a ratchet connection 600 configured to drivingly engage the first element solely in a first rotational direction about the z-axis. Here, as may be seen from Figure 1, the first element 100 is only drivingly engaged when counterpart of the ratchet connection 600 (counterpart not shown) rotates counter-clockwise about the z-axis relative to the first element 100. The second element 200 may be coupled or couplable to the external power input unit 20 through a cassette 250, as may be seen for the embodiment shown in Figure 4. Alternatively, the second element 200 may be coupled or couplable to the external power input unit 20 through a rear sprocket wheel or- in particular when the electric motor power output unit 10 is a crank or mid drive electric motor power unit 10 - the second element 200 may be coupled or couplable, in particular directly coupled, to a pedal crankset of the e-bike.

The elastic connection unit 400 is arranged in between and acts as a spacer between the first and second element 100, 200 and thus first and second magnet 110, 210. Additionally, according to the embodiment of Figure 1, the first and second element 100, 200 comprise pins engaging with the elastic connection unit 400 and acting as a spacer as well. According to the embodiment of Figure 1, the elastic connection unit 400 consists of four elastic elements 410 evenly distributed around the z-axis in the circumferential direction. The elastic elements 410 are formed as closed loops or sleeves arranged around respective pins protruding towards each other form the first and second element 100, 200. According to the embodiment of Figures 3 and 4, the elastic connection unit 400 is formed as a tube extending along the z-axis and comprises four elastic elements 410 evenly distributed around the z-axis in the circumferential direction. Each elastic element consists of a sleeve and a protrusion and the first and second element 100, 200 each comprise four pins selectively inserted into the corresponding sleeve along the z-axis or radially abutting the corresponding protrusion. For instance, as may be seen from Figure 4, the first element 100 comprises four pins configured to meshingly engage with the elastic connection unit 400 in-between the four radially protruding elastic elements 410. Alternatively, the elastic connection 400 or the elastic elements 410 may be formed as springs. The elastic connection unit 400 may comprise or consist of a thermoplastic elastomer. Additionally or alternatively - and depending on the maximum offset angle to be considered while avoiding any plastic deformation of the elastic connection unit 400 - the elastic connection unit may comprise or consist of a soft metal. In the examples at hand, the elastic connection 400 consists of a thermoplastic polymer. The elastic connection unit may have a Young's modulus between 1 GPa and 40 GPa, in particular between 5 GPa and 20 GPa. In contrast, the first and second element 100, 200 may be rigid elements. As stated above, the number of elastic elements and material properties of the elastic connection unit may be chosen according to the desired range of and sensitivity to the torque to be determined. Typically, the torque values in e-bike drives (as measured at the rear wheel) do not exceed 600 Nm. It may be useful to provide torque measurement sensitivity from 0.5 Nm or 1 Nm upwards. The measurement range may be not less than 50 Nm, in particular not less than 100 Nm.

As shown in Figure 4, the sensor unit 1 may further comprise a third magnet 310 rotationally coupled or couplable to a rear wheel of the e-bike rotatable about the z-axis and the sensor system may be configured to detect an angular position of the third magnet 310 about the z-axis. The sensor system may comprise a third sensor (not shown) configured to detect a magnetic field of at least the third magnet 310. In particular, the third magnet 310 may be rigidly coupled, at least with respect to a rotation about the z-axis, to the rear wheel of the e-bike, e.g. to the rotor of the rear wheel main shaft and/or hub of the e-bike. According to the embodiment shown in Figure 4, the third magnet 310 is rigidly coupled with a rear wheel hub 150. The third magnet 310 and third sensor may be arranged, configured and designed according to the above features of the first and second magnet 110, 210 and first and second sensor 120, 220.

According to the embodiment shown in Figures 3 and 4, the sensor unit 1 further comprises two bearings 500 configured to rotatably bear the first and second element 100, 200 about the z-axis. The bearings 500 are arranged on opposite sides of the elastic connection unit 400 along the z-axis. The bearings 500 are plain bearings. Furthermore, the sensor unit 1 as shown in Figures 3 and 4 is designed as a cartridge with a housing configured to secure the sensor unit 1 to, or presently inside, a main shaft 50, in particular an inner bearing of a main shaft, of a rear wheel (see Figure 4) or, alternatively, crankset of the e-bike. According to the embodiment shown in Figures 3 and 4, the housing is formed as a part of the second element 200. The second element 200 provides the inner body of a cassette 250.

According to the embodiment of Figures 3 and 4, the sensor unit 1- except for the magnets 110, 210 - is made from a non-magnetic or poorly magnetic material. In particular, the first element 100 apart from the first magnet 110, the second element 200 apart from the second magnet 210, the elastic connection unit 400, the housing or cassette body formed by the second element 200 and the bearings 500 are made of a non-magnetic or poorly magnetic material. Alternatively, according to the embodiment of Figure 1, the first element 100 is made from a magnetic material.

As mentioned above, the first and second magnet 110, 210 are each configured to provide a magnetic field that, upon rotation about the z-axis, accordingly rotates and thus varies about the z-axis. The sensor system together with the respective sensor 120, 220 is then able to determine the respective angle or angular position of the corresponding magnet 110, 210 about the z-axis in relation to a pre-defined reference system. As can best be seen from the embodiment of Figure 1 - but also applies to the embodiment of Figures 3 and 4 - when no torque is applied to the second element 200, any difference between measured angles of the first and second magnet 110, 210 is (within a predetermined range) constant and provides an equilibrium or rest angle at which any rotation of the first and second element 100, 200 relative to each other is at rest, i.e. both elements 100, 200 are not rotating or rotating at equal and constant angular velocity. Here, a clockwise rotation of the first and second element 100, 200 (arc arrow in Figure 1) provides the driving direction of the e-bike, i.e. forward direction of propulsion. Due to the ratchet connection 600 of the first element 100 any rotation of the electric motor EM and thus electric motor output unit 20 according to the driving or forward direction does not engage the first element 100 which thus remains still about the z-axis. Even if the second element 200 is rotated clockwise but its angular velocity does not exceed the angular velocity of the electric motor EM sided counterpart (not shown) of the ratchet connection 600, the first and second element 100, 200 are rotating with a constant angular velocity by means of the elastic connection unit 400. In other words, an angular difference of the measured angular positions of the first and second magnet 210, 220 corresponds to the rest angle. The rest angle may cover a predetermined range of about 6-7°, for example. When some torque is applied by the driver and the torque exceeds a predetermined threshold value, e.g. when the angular velocity of the second element 200 and thus first element 100 exceeds the angular velocity of the ratchet connection 600 counterpart thus resulting in an engagement of the ratchet connection 600, a deviation from the rest angle is observed resulting in an angular offset between the first and second element 100, 200 thus causing deformation of the elastic connection unit 400. The angular accuracy of the determined offset angle may be 0.1°. In general, the angular offset or offset angle may be positive or negative with respect to the rest angle - depending on the configuration of the elastic connection unit and whether the elastic connection unit is stretched or compressed, respectively. Here, according to the embodiment of Figure 1, the elastic connection unit 400 is stretched, when the torque from the second element 200 exceeds said threshold value. The deformation of the elastic connection unit 400 results in a restoring force of the elastic connection unit 400, the restoring force being a function of the applied torque. In particular, in case the elastic deformation of the elastic connection unit 400 obeys Hook's law, the restoring force is proportional to the acting torque. Consequently, by providing measurement of the angular positions of the first and second magnet 110, 120 and knowing the function between deformation or restoring force of the elastic connection unit 400 and torque, the sensor unit 1 enables torque detection and determination. Furthermore, the respective applied power by the driver may be determined based on the angular speed of the second element 200 which results from the time derivative of the angular position of the second magnet 210 about the z-axis. The configuration of driven and driving parts described herein can also be extended to other constellations in accordance with the above considerations, e.g. for bidirectional or otherwise coupled output and input units.

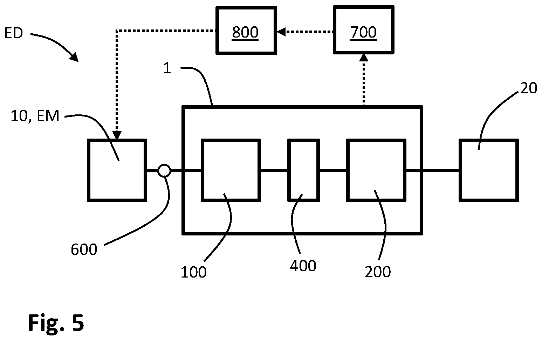

In Figure 5, an electric drivetrain system ED for an e-bike is shown. The drivetrain system ED comprises an electric power output unit 10 with an electric motor EM, an external power input unit 20 and the sensor unit 1 according to any one of the embodiments described herein. The external power input unit is an external human power unit, i.e. a power unit as known from a conventional bike and/or e-bike drivetrain, e.g. including a pedal drive with a pedal crankset drivingly coupled to a cassette or rear sprocket wheel, which in turn is drivingly coupled to a drive or rear wheel of the bike. The electric motor EM may be a rear hub electric motor, in particular a planetary gearset driven rear hub electric motor. Alternatively, the electric motor may be a crank or mid drive electric motor. The sensor unit 1 may be arranged or arrangeable inside a main shaft, in particular an inner bearing of a main shaft, of a rear wheel of the e-bike. Alternatively, the sensor unit 1 may be arranged or arrangeable inside a main shaft, in particular an inner bearing of a main shaft or a bottom bracket, of a crankset. The electric drivetrain system ED further comprises a processor 700 configured to calculate a torque input and a power input based on the detected angular positions of the first and second magnet 110, 210 and/or to calculate the angular position of the third magnet as described above. Furthermore, the electric drivetrain system ED comprises a controller 800 configured to control an electric motor EM power output based on the torque input and/or power input and optionally angular position of the third magnet provided from the processor 700.

Further embodiments will be apparent to the skilled person in an obvious manner.

## Claims

1. A sensor unit (1) for detecting an external power input to an electric drivetrain of an e-bike, the sensor unit (1) comprising:
a first element (100) comprising a first magnet (110), both being jointly rotatable about a z-axis, the first element (100) being coupled or couplable to an electric motor power output unit (10);
a second element (200) comprising a second magnet (210), both being jointly rotatable about the z-axis, the second element (200) being coupled or couplable to an external power input unit (20), in particular an external human power input unit (20);
a sensor system configured to determine an angular position of the first magnet (110) about the z-axis and an angular position of the second magnet (210) about the z-axis;
an elastic connection unit (400) configured to rotationally couple the first element (100) to the second element (200) about the z-axis such, that an angular offset between the angular positions of the first and second element (100, 200) is related to an applied torque between the first and second element (100, 200).

2. The sensor unit (1) of claim 1, wherein the first and second magnet (110, 210) are each a ring magnet, in particular a two pole ring magnet with two diametrically arranged poles, arranged concentrically with the z axis and along an x,y-plane perpendicular to the z-axis, and the first and second sensors (120, 220) are each configured to measure a magnetic flux in the x,y-plane.

3. The sensor unit (1) of claim 1 or 2, wherein the sensor system comprises a first sensor (120) configured to detect a magnetic field of at least the first magnet (110) and a second sensor (220) configured to detect the magnetic field of at least the second magnet (220), wherein preferably the first and second sensor (120, 220) are each arranged at the z-axis.

4. The sensor unit (1) of any one of claims 1 to 3, wherein the first element (100) is coupled or couplable to the electric motor power output unit (10) through a ratchet connection (600) configured to drivingly engage the first element (100) solely in a first rotational direction about the z-axis.

5. The sensor unit (1) of any one of claims 1 to 4, wherein the second element (200) is coupled or couplable to the external power input unit (20) through a cassette (250) or a rear sprocket wheel.

6. The sensor unit (1) of any one of claims 1 to 5, wherein the elastic connection unit (400) comprises at least two elastic elements (410), in particular evenly, distributed around the z-axis in the circumferential direction.

7. The sensor unit (1) of any one of claims 1 to 6, wherein the elastic connection unit (400) comprises or consists of a thermoplastic elastomer and/or a soft metal.

8. The sensor unit (1) of any one of claims 1 to 7, further comprising a third magnet rotationally coupled or couplable to a rear wheel of the e-bike rotatable about the z-axis, wherein the sensor system is configured to detect an angular position of the third magnet about the z-axis.

9. The sensor unit (1) of any one of claims 1 to 8, further comprising at least one bearing (500), in particular plain bearing, configured to rotatably bear the first and/or second elements (100, 200) about the z-axis.

10. The sensor unit (1) of any one of claims 1 to 9, wherein the sensor unit (1) is designed as a cartridge with a housing configured to secure the sensor unit to a main shaft, in particular an inner bearing of a main shaft, of a rear wheel or crankset of the e-bike.

11. The sensor unit (1) of any one of claims 1 to 10, wherein, except for the magnets (110, 210), the sensor unit (1) is made from a non-magnetic material or a poorly magnetic material.

12. The sensor unit of any one of claims 1 to 11, wherein the first element (100) itself is designed as the first magnet (110) and/or is made from a magnetic material.

13. An electric drivetrain system (ED) for an e-bike, the drivetrain system comprising an electric power output unit (10) with an electric motor (EM), an external power input unit (20), in particular an external human power input unit (20), and the sensor unit (1) of any one of claims 1 to 12.

14. The electric drivetrain system (ED) of claim 13, wherein the electric motor (EM) is a rear hub electric motor, in particular a planetary gearset driven rear hub electric motor.

15. The electric drivetrain system (ED) of claim 13 or 14, wherein the sensor unit (1) is arranged or arrangeable inside a main shaft, in particular an inner bearing of a main shaft, of a rear wheel of the e-bike.
